# EUROPEAN PATENT SPECIFICATION

(11) **EP 2 984 916 B1**
(45) Date of publication and mention of the grant of the patent: **14.12.2022**
(21) Application number: 14180517.6
(22) Date of filing: 11.08.2014
(51) Int. Cl.: A01B 79/00, A01B 69/00

(54) **Method for planning a path of an agricultural machine**
Verfahren zur Planung einer Route einer landwirtschaftlichen Maschine
Procédé pour planifier un parcours d'une machine agricole

(43) Date of publication of application: 17.02.2016
(73) Proprietor: CLAAS E-Systems GmbH, 49201 Dissen am Teutoburger Wald (DE)
(72) Inventor: Jensen, Martin Andreas Falk, 2990 Nivaa (DK)
(74) Representative: Gottschald, Jan

(56) References cited:
- EP-A1- 0 761 084
- EP-A2- 0 821 296
- EP-A2- 1 406 140
- WO-A1-2012/016752
- DE-A1-102008 021 785
- US-A1- 2013 311 050
- US-B2- 8 344 897
- MARK SPEKKEN ET AL: "Optimized routing on agricultural fields by minimizing maneuvering and servicing time", PRECISION AGRICULTURE, vol. 14, no. 2, 1 April 2013 (2013-04-01), pages 224-244, XP055168189, ISSN: 1385-2256, DOI: 10.1007/s11119-012-9290-5

## Description

The invention is directed at a method for planning a path of an agricultural machine with the features of the general part of claim 1.

There is a continuous demand for making agricultural processes more efficient and thereby more economical. This concerns the productivity of the agricultural field and also the construction of the agricultural machine and its implements. A further aspect of increasing importance is that of planning the agricultural process on an agricultural field. Here, in particular the path to be taken by the agricultural machine to execute the agricultural process on the agricultural field is of relevance. A variety of considerations apply in determining this path, for example covering as much of the agricultural field as possible with the agricultural process when traversing the path. Another such consideration is that of reset tours. This applies in particular to agricultural processes in which a stock or reservoir of the agricultural machine is successively depleted or filled up until a maximum or minimum capacity - more generally speaking a supply limit - is reached, at which point a replenishment or unloading - more generally described as a supply reset - is necessary before the agricultural process can continue. Generally, such a supply reset will require an interruption of the agricultural process and may also require the agricultural machine to leave the agricultural field in order to rendezvous with an appropriate supply reset apparatus.

From EP 0 821 296 A2 a method for planning a path for an agricultural machine prior to starting an agricultural process is known. A further method for planning a path is know from MARK SPEKKEN ET AL: "Optimized routing on agricultural fields by minimizing maneuvering and servicing time", PRECISION AGRICULTURE, vol. 14, no. 2, 1 April 2013, pages 224-244, XP055168189, ISSN 1385-2256, DOI: 10.1007/s11119-012-9290-5. Similar methods are known from US 8,344,897 B2 and US 2013/311050 A1.

Prior art document DE 196 29 618 A1, from which the present invention proceeds, is concerned with planning the path of an agricultural machine for an agricultural process on an agricultural field and cites the possibility of optimization of this planning only in general terms.

Therefore the problem of the invention is to provide a cost-effective and economical method for planning a path of an agricultural machine.

With regard to a method for planning a path of an agricultural machine with the features of the general part of claim 1 the problem is solved by the features of the characterizing part of claim 1 .

The invention is based on the realization that the planning of economical paths in terms of reset tours is possible if the planned path is based on pre-defined target tracks or on portions thereof, which target tracks have been defined beforehand to provide a good coverage of a working area of the agricultural field.

During the above noted reset tours the execution of the supply-based agricultural process is interrupted as noted above, such that those reset tours are a major concern in terms of economy, namely because the number of reset tours, the distance covered by the reset tours and any residual capacity left during reset tours beyond the absolute minimum present economical waste.

When the necessity for a reset tour is approaching, there is a trade-off between starting the reset tour early, e.g. while still in the headland of the working area, which may mean executing a reset tour with a relatively large residual with respect to a maximum or minimum capacity in the supply stock, or proceeding into the working area with the agricultural process until this residual is used up, which in turn may mean a longer reset tour, both in terms of time and distance, and unproductive traversal in particular within the working area.

The invention recognizes that a sufficient coverage of the working area can be effected by ensuring a coverage of the pre-defined tracks by the planned path, namely by composing at least part of the the path from the pre-defined target tracks or from portions thereof. This in turn permits analytically planning various maneuvers in the planned path which are restricted to the pre-defined target tracks and which may be used to align the depletion of the stock with reaching the headlands of the agricultural field, i.e. leaving the working area. In other words, the path determination is performed according to at least one optimization criterion, which optimization criterion/criteria is/are regarding the reset tours.

Since the pre-defined target tracks present a kind of road map, for which the as yet covered and as yet uncovered sections can be traced precisely, also the resumption of the process in the working area can be performed without having to repeatedly cover the same working area portion. In contrast, without the benefit of those pre-defined target tracks, planning such kind of maneuvers that permit coverage of the working area in an analytical way and without the "painting oneself in a comer" effect is much more difficult.

There are a number of possibilities for defining the optimization criterion. One alternative, for example, is the minimization of costs incurred by the reset tours, which costs may be fuel costs or the like.

Claim 2 is directed to optimization criteria, which in the first place prevent the agricultural machine unproductively moving within the working area of the agricultural field, in particular with the supply stock already having reached its supply limit.

Claim 3 presents a further possibility for defining the optimization criterion. A preferred option of claim 4 permits the definition of a supply threshold which must be crossed before a reset tour. Thus, the wastage based on the residual with respect to the supply limit during the reset tour can be capped. Another preferred embodiment according to claim 4 aims to have the residual with respect to the supply limit for each reset tour as small as possible. A yet preferred embodiment according to claim 4 in turn aims to have the start of the reset tour coincide as much as possible with the time of crossing into the headlands by the agricultural machine. Thus, traversal within the working area with the supply stock at the supply limit - and therefore without the possibility of processing during traversal - is again avoided.

The particularly preferred embodiment according to claim 5 focusses on the optimizing being directed to the aspect of selecting target tracks as well as to the aspect of sequencing the selected target tracks. In other words, the above noted selecting as well as the above noted sequencing are being, preferably iteratively, modified until the at least one optimization criterion is met.

The invention is directed at a preferred maneuver considered in planning the path to achieve the desired optimization, namely performing U-turns from a current start target track to a destination target track, which has not been covered yet by the path at least in the direction of traversal of the agricultural machine after the U-turn. By arranging for such a U-turn at specific points along the planned path, reaching the supply limit or threshold can be matched with reaching the headland of the agricultural field while at the same time having the path still confined to the pre-defined target tracks.

The preferred embodiments of dependent claims 7 to 10 are directed at a further preferred maneuver for achieving the desired optimization which relates to the choice of the sequence in which the pre-defined target tracks are to be covered by the planned path. One possible sequence of the pre-defined target tracks known from the prior art amounts to successively covering adjacent target tracks by making a turn in the headland to the next target track. According to these preferred embodiments, target tracks can be skipped (claim 8). This may in particular be advantageous when the target tracks have different lengths or if for some other reason reaching the supply limit or threshold is possible at the end of one target track but not possible or more difficult when traversing the other target track, e.g. the skipped target track. According to a preferred embodiment, the method is applied dynamically, i.e. while the agricultural machine is traversing the planned path. Thus, the planned path may be adjusted if, for example, the measured rate at which the current supply stock approaches the supply threshold or the supply limit deviates from the calculated rate. Such a deviation may, for example, cause a U-turn to be executed earlier or later than originally planned.

Further details, features, goals and advantages of the present invention shall be described in the following based on the illustration of a preferred embodiment. In the illustration, the figures show the following:
- Fig. 1: a schematic diagram of a traversal of a working area along pre-defined target tracks a) according to the prior art and b) with a U-turn according to the invention of the proposed method and
- Fig. 2: a schematic diagram of a traversal of a sequence of pre-defined target tracks in a working area a) according to the prior art and b) in a sequence determined according to a further embodiment of a method which not part of the invention.

The method according to the proposal is for planning a path 1 of an agricultural machine 2. This agricultural machine 2 can be any vehicle or group of vehicles moving as a train of vehicles, including fixedly or detachably coupled machinery, for agricultural work on a field. The path 1 here is a route, principally of arbitrary shape, to be traversed by the agricultural machine 2 or already traversed by the agricultural machine 2. In the method according to the proposal, the agricultural machine 2 traverses the path 1. This may occur by e.g. providing the planned path 1 to an automated steering system of the agricultural machine. The planned path 1 may also be presented to a driver of the agricultural machine 2 on a display such that the driver steers the agricultural machine according to the path 1.

Further, in the method according to the proposal the agricultural machine 2 executes a supply-based agricultural process in a working area 3 of an agricultural field 4 with an implement along the planned path 1. The working area 3 of the agricultural field 4 is that part of the agricultural field 4 which is distinct from the headlands 5 of the agricultural field 4 and from other sections, e.g. obstacles and their immediate surroundings, of the agricultural field 4 to be treated as headlands or as impassable territory. If the agricultural field 4 does not comprise headlands 5 or such sections, then the working area 3 may be identical in extent to the agricultural field 4 in its entirety. It is noted that the path 1 as such is not limited to the working area 3 or the agricultural field 4.

The above supply-based agricultural process is any agricultural process executed by the implement of the agricultural machine 2 which can only be performed until a supply limit is reached. Such a supply limit may be the in particular complete depletion of a supply stock 6 of the agricultural machine 2 for an agricultural process that comprises distributing a supply from the supply stock 6 of the agricultural machine 2, such as for example sowing, fertilizing or applying plant protectants. On the other hand, such a supply limit may also be the in particular complete filling of the supply stock 6 of the agricultural machine 2 for an agricultural process that comprises collecting into the supply stock 6 of the agricultural process. Such an agricultural process may in particular be a harvesting process, with the material, e.g. crop, thus harvested being stored in the supply stock 6. Accordingly, the above implement may be any machinery joint or separate to the rest of the agricultural machine 2 which is configured to perform that agricultural process. At any time, a supply level may be associated with the supply stock 6. For the example given in the illustration, the agricultural process is one comprising depletion of the supply stock 6 and accordingly, the supply levels shown include a full supply level 7a, an empty supply level 7b - which here corresponds to the supply limit - and a near-empty supply level 7c with a residual amount. This is to be understood without loss of generality so that for an agricultural process comprising filling the supply stock 6, the according supply levels are to be understood analogously identical and therefore respectively inverted.

It is also to be noted that the rate at which the supply level of the supply stock 6 approaches the supply limit may be an adjustable parameter of the agricultural process. This may for example concern the amount of fertilizer to be used per unit area of the working area 3. Here in particular the desired rate, i.e. the target rate, may be not a single value but rather a value bracket, thereby permitting some adjustment while at the same time remaining within target bounds. Such an adjustment of the agricultural process may also be employed as part of the method according to the proposal.

In the method according to the proposal, the path 1 comprises reset tours 8 to reset the supply stock 6 of the agricultural machine 2 with a supply reset apparatus 9. The reset tours 8 are those parts of the path 1 specifically undertaken in order to reset the supply stock 6. In particular, the agricultural process is not executed on the reset tours 8. It may however also be that a regular, i.e. non-reset tour, section of the path 1 leads in the direction of the supply reset apparatus 9. It is to be noted that the reset tour 8 is planned as part of the path 1 and that this planning takes into account the position of the supply reset apparatus 9 and the - in particular current - position of the agricultural machine 2. Resetting the supply stock 6 then comprises either re-filling the supply stock 6 - for an agricultural process based on distribution as described above - or emptying the supply stock 6 - for an agricultural process based on e.g. harvesting as also mentioned above. Consequently, the supply reset apparatus 9 is any structure or apparatus to effect such a reset of the supply stock 6 when the agricultural machine 2 is in sufficient proximity to the supply reset apparatus 9.

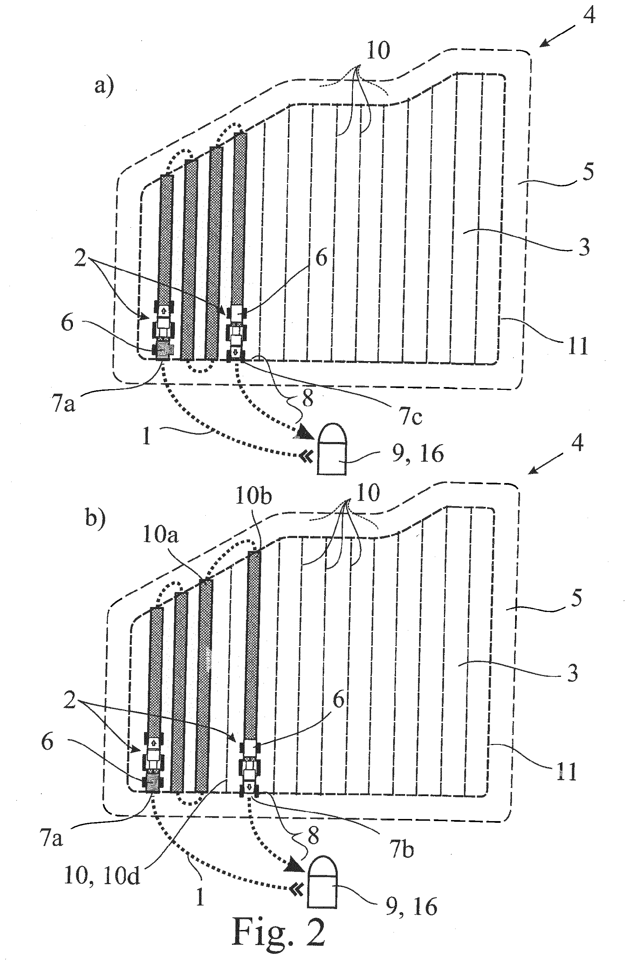

With regard to the costs incurred by the reset tours 8, the factors contributing to such costs comprise the number of such reset tours 8, the distance traversed (i.e., the length) for the reset tours 8, the fuel consumed while traversing the reset tours 8, the time such traversal of the reset tours 8 takes and the degree to which the supply stock 6 has not yet reached its supply limit during the reset tour 8. This last point corresponds to the "distance" between the level of supply stock 6 on beginning the reset tour 8 and said supply limit, which may also be called residual. For example, in Fig. 2b, the situation of which will be explained in greater detail below, the supply stock 6 is at an empty supply level 7b at the beginning of the reset tour 8, from which it follows that the costs associated with such a residual are as minimal as possible. On the other hand, in Fig. 2a the supply stock 6 is only at a near-empty supply level 7c at the beginning of its respective reset tour 8. Therefore the associated residual and costs based on the reset tour 8 are in any case greater than for the scenario in Fig. 2b.

This correspondence exists because in such a situation, at least theoretically, commencing the reset tour 8 could still be delayed. It is to be noted that it may not be possible to have every reset tour 8 begin only when the supply limit is precisely reached. With regard to the above distance traversed for the reset tours 8, that distance may affect costs differently depending on whether that distance traversed is in the working area 3, in the headlands 5 or outside the agricultural field 4, because the ground traversed may have a different sensitivity to being traversed upon in terms of soil compaction. Generally speaking, soil compaction is more problematic within the working area 3. Similarly, the above fuel costs per distance traversed may diverge for different areas because of variations in terrain features, e.g. muddiness, inclination etc., which may affect fuel consumption rates.

The method according to the proposal contains a step wherein the path 1 is determined by composing at least part of the the path 1 from portions of pre-defined target tracks 10, which target tracks 10 have been defined beforehand. The path 1 is optimized according to at least one optimization criterion regarding the reset tours 8. This means that the path 1 is being optimized in view of a parameter of the reset tours 8, which may be the costs incurred by the reset tours 8 for example.

These target tracks 10 may either be based on or identical to previously used tracks by either the same agricultural machine 2 or a different agricultural machine. Thus, they may be historical target tracks 10. They may also be generated specifically, e.g. by an algorithm and in particular an analytical algorithm, prior to performing the method according to the proposal. In general, the pre-defined target tracks 10 are a set of parallel, usually straight, routes arranged within the working area 3 and associated with the agricultural process such that by traversing the target tracks 10 and executing the agricultural process, the working area 3 is substantially completely subjected to the agricultural process. Accordingly, the spacing between the target tracks 10 is such that it corresponds to a processing width of the implement, i.e. the width across which the agricultural process is effected by the implement as the agricultural machine 2 traverses the path 1 and executes that process.

By having the path 1 cover the target tracks 10, the method according to the proposal makes it possible to plan a path 1 which on the one hand deviates from a plain, sequential and complete traversal of adjacent target tracks 10 to minimize the costs incurred by the reset tours 8, and on the other hand permits resuming the execution of the agricultural process such that the target tracks 10 can be covered substantially in their entirety, thereby also covering the working area 3 substantially in its entirety with the agricultural process.

Preferably, the working area 3 is bounded by an outer boundary 11 of the working area 3. If the agricultural field 4 comprises headlands 5 or other parts of the agricultural field 4 distinct from the working area 3, then the outer boundary 11 defines the border between the working area 3 and these areas. Otherwise, the outer boundary 11 of the working area 3 may coincide with the outer boundary of the agricultural field 4.

The method according to the proposal can be adjusted in its implementation along various optimization criteria, that may be combined with each other dependent from the respective area of application. In particular, the optimization criteria may combined using logical operations as an AND-operation or an OR-operation.

According to a preferred embodiment, as noted above, an optimization criterion is to have the costs incurred by the reset tours 8 minimized. According to another preferred embodiment an optimization criterion is to have the number of reset tours 8 minimized. Again another preferred embodiment may be to have the length of travel of the reset tours 8 minimized. Alternatively or in addition, it may also be preferred to have the fuel consumption during the reset tours 8 minimized.

Another preferred optimization criterion is to have the supply stock 6 converge to a supply threshold, preferably to the supply limit, when the agricultural machine 2 crosses the outer boundary 11. In this case it is preferred to have the respective reset tour 8 executed immediately when the agricultural machine 2 crosses the outer boundary 11.

In addition or alternatively, a preferred optimization criterion is to minimize the path 1 within the working area 3 after the supply stock 6 has reached a, preferably pre-defined, supply threshold, preferably the supply limit.

According to another preferred embodiment, which may well be combined with the last mentioned embodiment, an optimization criterion is to have the respective reset tour 8 executed when or after the supply stock 6 reaches a, preferably pre-defined, supply threshold. Such a supply threshold may in particular be user-defined. In the example of a harvesting agricultural process, such a supply threshold may be defined at the mark when only 10 % of the supply stock 6 of the agricultural machine 2 remains unfilled and able to accommodate further harvest. In other words, 90 % of the supply stock 6 is filled. Given such a definition, the method according to the invention will arrange the reset tours 8 such that a reset tour 8 is only begun when of after that supply threshold has been reached. If e.g. 20 % of the supply stock 6 remain, the agricultural machine 2 shall continue to traverse the path 1 and execute the agricultural process in the working area 3 until the threshold is reached. In this way, costs - in particular, per reset tour 8 - associated with residual capacity of the supply stock 6 during reset tours 8 can be capped.

As already indicated above, if a reset tour 8 begins execution precisely on reaching the supply limit, there is no cost or, equivalently, the minimum possible cost, associated with this reset tour 8 based on residual capacity of the supply stock 6. Therefore, it is preferred that an optimization criterion is to converge a supply level of the supply stock 6 on execution of the respective reset tour 8 to the supply limit. Thus, the optimization strives to minimize the residual, i.e. measure of how much the supply state of the supply stock 6 deviates from the supply limit. This measure may for example be a current percentage filling value of the supply stock 6, with the supply limit corresponding to either 0 % or 100 %, depending on the agricultural process. Returning to the example of Fig. 2a, b, in Fig. 2b the supply stock 6 is at precisely the empty supply level 7b - corresponding to 0 % filling value and the supply limit - whereas in Fig. 2a the supply stock 6 is at a near-empty supply level 7c corresponding to 5 % filling value.

According to a preferred embodiment of the method according to the proposal, an optimization criterion is to have each reset tour 8 substantially, preferably entirely, arranged outside the outer boundary 11 of the working area 3. This preferred embodiment presents a minimization of the length of the reset tours 8 in that the portion of the path 1 within the working area 3 can be traversed while executing the agricultural process and substantially no traversal occurs within the working area 3 without such execution for reason of a reset tour 8. In practical tests, best results have been achieved when at least part of the path 1 is optimized taking into account the position of the agricultural machine 2, the position of the supply reset apparatus 9 and the supply level of the supply stock 6.

At least part of the path 1 is determined by selecting portions of target tracks 10 and by sequencing the selected portions of target tracks 10 into a sequence, the selecting and sequencing being optimized according to the at least one optimization criterion. Preferably, at least part of the path 1 is determined by selecting target tracks 10 and portions of target tracks 10 and by sequencing the selected target tracks 10 and portions of target tracks 10 into a sequence, the selecting and sequencing being optimized according to the at least one optimization criterion.

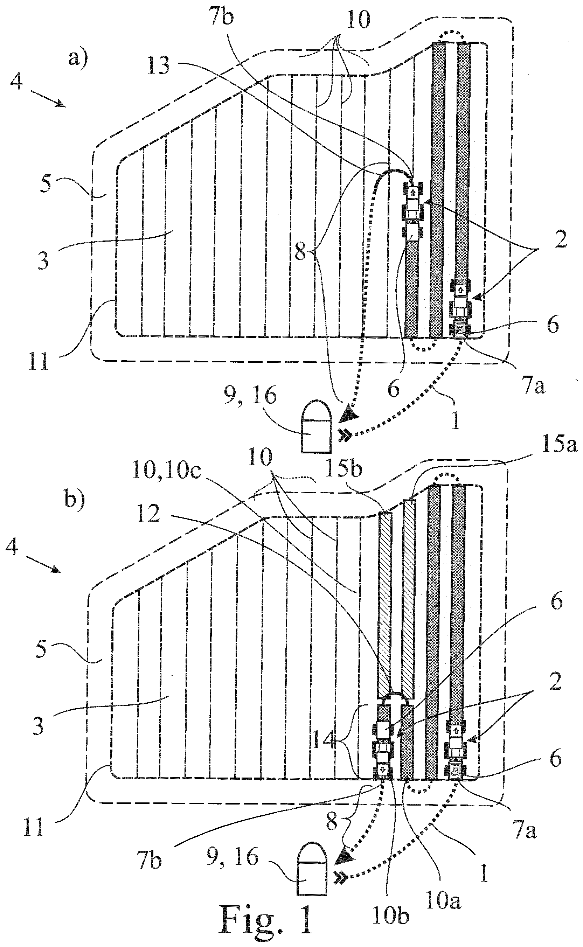

Fig. 1a, b contrast a traversal of the working area 3 on a path planned according to the prior art with a traversal of the working area 3 on a path 1 planned according to an embodiment of the proposed method. It is preferred that the path 1 comprises a U-turn 12 from a start target track 10a to a destination target track 10b. According to the invention such a U-turn is arranged within the working area 3. A U-turn 12 in this sense, shown in Fig. 1b, involves a change between target tracks 10 - here from the start target track 10a to the destination target track 10b - and a change, in particular a reversal, of the direction of traversal. It is also preferred - though not necessary - that the destination target track 10b is adjacent to the start target track 10a, as is also shown in Fig. 1b. A preferred criterion for such a U-turn 12 is that the U-turn 12 is arranged in the path 1 if fully traversing the start target track 10a would result in the supply stock 6 reaching the supply limit before the agricultural machine 2 crosses the outer boundary 11. Such a continuation of a full traversal of the start target track 10a without a U-turn 12 is shown in Fig. la. As can be seen, the supply stock 6 reaches the supply limit at limit point 13. The reset tour 8 commences thereafter and necessitates traversing the working area 3 without being able to further execute the agricultural process, even though the corresponding sections of the working area 3 have not been subject to that agricultural process yet.

Alternatively, the U-turn 12 may also be arranged in the path 1 if fully traversing the start target track 10a and afterwards fully traversing the destination target track 10b would result in the supply stock 6 reaching the supply limit before the agricultural machine 2 crosses the outer boundary 11. This scenario is relevant if the supply reset apparatus 9 is arranged on one side of the working area 3, so that the supply limit should be reached by the supply stock 6 before the outer boundary 11 is crossed on the side of the working area 3 corresponding to the location of the supply reset apparatus 9.

It is further preferred that the U-turn 12 is arranged in the path 1 along the start target track 10a such that the agricultural machine 2 crosses the outer boundary 11 on the destination target track 10b before the supply stock 6 reaches the supply limit. The optimization is even greater if, as preferred, the agricultural machine 2 crosses the outer boundary 11 substantially simultaneously to the supply stock 6 reaching the supply limit. This scenario is illustrated in Fig. 1b, in which the supply stock 6 is at the empty supply level 7b on crossing the outer boundary 11.

It is preferred that - also in accordance with Fig. 1b - the U-turn 12 is arranged in the path 1 such that a reversal section 14 on the destination target track 10b from the U-turn 12 to the outer boundary 11 is uncovered by the path 1 before the U-turn 12. In other words, that reversal section 14 has not been traversed yet by the agricultural machine 2 on the path 1 and is now traversed after the reversal due to the U-turn 12. Therefore, the agricultural process can be executed without double processing on this part of the path 1 and the working area 3, respectively.

Due to this U-turn 12, there will in general be a section of the start target track 10a and the destination target track 10b that has not been traversed by the agricultural machine 2 but that would have been traversed if the agricultural machine 2 had proceeded without a U-turn 12. In order to also ensure subjecting the corresponding parts of the working area 3 to the agricultural process, it is preferred that the path 1 is determined such that after returning from the reset tour 8 a respective complementary section 15a, b - both given in Fig. 1b - of the start target track 10a and the destination target track 10b is covered by the path 1. The complementary section 15a of the start target track 10a is the section following the U-turn 12 in the original direction of traversal. The complementary section 15b of the destination target track 10b is the section preceding the U-turn 12 with respect to the direction of traversal on the destination target track 10b after the U-turn 12. This covering of those complementary sections 15a, b preferably occurs only after a further target track 10c has been covered by the path 1, because it may be advantageous to traverse to the other side of the boundary 11 after the reset tour 8 is complete for better access to the complementary sections 15a, b.

It is to be noted that it is also possible to change from a start target track 10a to a destination target track 10b within the working area 3 along the path 1 without a reversal of direction. This would also be within the method according to the proposal. There are also further maneuvers which may be used in planning the path 1 according to the proposal. In some cases it may be advantageous to traverse sections of the path 1 without executing the agricultural process, even though an execution of the agricultural process would be possible based on the state of the supply stock 6. This may be the case, for example, in order to be able to resume the agricultural process at a specific first location on the path 1 so that the supply stock 6 reaches the supply threshold or the supply limit at a specific second location on the path 1. To achieve this, the agricultural process may be set inactive on the respective sections on the path 1. Such sections of inactivity may not only occur while the agricultural machine 2 traverses a target track 10 in a straight line, but also during a transition from a start target track 10a to a destination target track 10b - which transition may or may not involve a U-turn 12 - or during a crossing of the outer boundary 11.

Fig. 2a, b also contrast a traversal of the working area 3 on a path planned according to the prior art with a traversal of the working area 3 on a path 1 planned according to a further embodiment of the proposed method. Here, a maneuver different from the one given in Fig. 1a, b is shown. In particular, it is preferred that determining the path 1 comprises determining a sequence of covering the target tracks 10 by the path 1, such that at least on above noted optimization criterion is met. The different target tracks 10 may have respective different lengths or, for example, different crop densities so that their respective traversal has a different effect on the supply stock 6. Thus, instead of traversing neighboring target tracks 10, the sequence may be determined differently. In particular, determining the path 1 may comprise determining the sequence of covering the target tracks 10 such that the agricultural machine 2 crosses the outer boundary 11 as or before the supply stock 6 reaches the supply limit. As already described above with regard to the embodiment of Fig. 1b, this may be in particular done such that the agricultural machine 2 crosses the outer boundary 11 substantially simultaneously to the supply stock 6 reaching the supply limit.

Again with reference to Fig. 2b, it can be seen that preferably determining the sequence of covering the target tracks 10 comprises skipping an intermediate target track 10d between a start target track 10a and a destination target track 10b, such that the at least one optimization criterion is met, wherein the destination target track 10b is covered immediately after the start target track 10a. When skipping in this way, more than one intermediate target track 10d may be skipped. This skipping is particularly advantageous when the intermediate target track 10d is adjacent to the start target track 10a and is skipped if, after having covered the start target track 10a, the agricultural machine 2 can traverse the destination target track 10b such that the agricultural machine 2 crosses the outer boundary 11 substantially simultaneously to the supply stock 6 reaching the supply limit. As seen from Fig. 2b, the agricultural machine 2 crosses the outer boundary 11 with the supply stock 6 at an empty supply level 7c, thereby ensuring that costs based on residual during the reset tour 8 are at the theoretical minimum. Accordingly, the reset tour 8 may commence immediately with substantially no residual in the supply stock 6. The skipped intermediate target track 10d may then be covered later along the path 1 and may in turn itself be suitable as a destination target track when skipping yet another target track 10.

Fig. 2a illustrates an approach from the prior art in which adjacent target tracks 10 are covered successively without skipping. Thus when the intermediate target track 10d is covered after the start target track 10a, the supply stock 6 has not yet reached the supply limit. In particular and as already described, the supply stock is at the near-empty supply level 7c. Since it is almost at the supply limit, a reset tour 8 begins anyway, but with additional costs because of that residual of the supply stock 6.

It may also be advantageous to skip an intermediate target track lOd as described even if no destination target track 10b presents itself for which a substantially simultaneous crossing of the outer boundary 11 and reaching the supply limit by the supply stock 6 can be achieved. Consequently it is also preferred that the intermediate target track 10d adjacent to the start target track 10a is skipped if, after having covered the start target track 10a, the supply stock 6 after traversing the destination target track 10b and crossing the outer boundary 11 is closer to the supply limit than it would be after traversing the intermediate target track 10d and crossing the outer boundary 11. Thus the remaining residue is at least smaller for the destination target track 10a than for the skipped intermediate target track 10d.

According to a further preferred embodiment, the path 1 is determined such that the number of reset tours 8 is minimized. The theoretical minimum number of reset tours 8 may be calculated as follows: Note that for this calculation the last tour to the supply reset apparatus 9 after completion of the agricultural process on the working area 3 is also understood as a reset tour 8. If it is not, the minimum number of reset tours 8 is one less than as calculated in the following. The total process volume associated with the working area 3 and the agricultural process may be known or calculated prior to planning the path 1 according to the proposal. In the case of a fertilizing process, this may be a total volume known a prior or calculated by multiplying the area of the working area 3 with the desired fertilizer amount per area. In the case of a harvesting process, this may be a total crop volume expected. It may also be calculated as an average crop density per area multiplied by the total area of the working area 3. It may also be calculated by summing local crop density values multiplied by the associated local subareas or in some other appropriate fashion. According to one alternative, this total process volume is associated only with the working area 3 proper. According to a further alternative, other parts of the agricultural field 4, e.g. the headlands 5, also fully or partially contribute to this total process volume. This contribution may also be smaller than for the working area 3, such as for example with a lower local crop density. The minimum number of reset tours 8 may then be determined by dividing this total process volume by the supply stock volume of the supply stock 6, which is based substantially on the supply limit, with the result then rounded up. In the general case that this division results in a fraction and therefore needs rounding up, the above supply threshold may be calculated based on by how much the result is rounded up.

According to a first variety, this amount, i.e. the amount by which the division result is rounded up and which hereinafter is referred to as buffer amount, may in turn be divided by the minimum number of reset tours 8, i.e. the result of rounding up, to arrive at the above supply threshold. Thus, it is preferred that a fixed supply threshold is determined for each reset tour 8 based on the total process volume of the working area 3 and the supply stock volume of the supply stock 6 such that a minimal number of reset tours 8 is possible. If the above supply threshold is calculated thus, it can be ensured that the number of reset tours 8 will not exceed the minimum number of reset tours 8 calculated in this way. For example, if the total process volume of the working area 3 corresponds to 2400 units and the supply stock volume of the supply stock 6 corresponds to 1000 units, a minimum number of 3 reset tours are necessary. Since the above division results in 2.4, the amount by which the result is rounded up corresponds to 0.6. Therefore, if the above supply threshold is set at 20 %, which corresponds to a division of 0.6 by 3, that minimum number of reset tours 8 can be achieved. In other words, a reset tour 8 shall only be started once the supply stock 6 is at least within 20 % of the supply limit and not earlier.

According to a second preferred variety, the above buffer amount may also be used to arrive at a supply threshold in the above sense which is dynamic and which likewise ensures that the number of reset tours 8 will not exceed the minimum number of reset tours 8 calculated in this way. Starting from the same exemplary situation with a working area 3 corresponding to 2400 units and a supply stock volume corresponding to 1000 units, the buffer amount then also corresponds to 0.6 or, equivalently, 60 %. Initially, i.e. before the first reset tour 8, the supply threshold may then be set to 60 %. After each reset tour 8, the current supply threshold is lowered by the residual remaining at the beginning of the respective reset tour 8. Thus, if the first reset tour 8 is begun with a residual of 0 %, i.e. at the supply limit, the supply threshold remains at 60 %. If, on the other hand, the first reset tour 8 is begun with a residual of 25 %, the supply threshold is lowered by that amount. Consequently, the new supply threshold is at 35 %. The same is repeated for each subsequent reset tour 8. According to this preferred embodiment, a running supply threshold is determined for each reset tour 8 based on the total process volume of the working area 3 and the supply stock volume of the supply stock 6, which running supply threshold is successively reduced by a residual of the supply stock 6 for each reset tour 8 and which running supply threshold enables a minimal number of reset tours 8.

For the case that there exists a plurality of supply reset apparatus 9, it is preferred that in determining the path 1, the respective supply reset apparatus 9 for a reset tour 9 is determined such that the costs incurred by the reset tours 8 are minimized. This may for example comprise determining that supply reset apparatus 9 which is closest to the agricultural machine 2 at the beginning of the reset tour 8.

It may be that planning of the path 1 is based on assumptions about the rate with which the supply stock 6 approaches the supply limit which turn out to be erroneous. For example, it may be that the crop density in a harvesting agricultural process is higher than expected, so that the supply limit of the supply stock 6 would be reached sooner than calculated. In order to accommodate such situations, it is preferred that the path 1 is dynamically updated while the agricultural machine 2 traverses the path 1. Preferably, the path 1 is dynamically updated based on a sensor measurement of the agricultural process. Such a sensor measurement may for example comprise the determination of the crop volume picked up by the agricultural machine 2 at a given point in time. The sensor measurement may also comprise a measurement of the supply stock 6 and in particular its supply level. Thus, the current situation of the supply stock 6, in particular with regard to the supply limit, may also be determined by the sensor measurement. In this way, a priori assumptions may be brought in line with actual measurements and the path 1 adapted accordingly.

As already described above, there are two principal kinds of agricultural processes for the method as proposed, namely directed at supply stock 6 depletion and supply stock 6 filling, respectively. Thus according to one embodiment, the agricultural process comprises depleting the supply stock 6 of the agricultural machine 2 and resetting the supply stock 6 comprises refilling the supply stock 6. According to an alternative embodiment the agricultural process comprises loading the supply stock 6 of the agricultural machine 2 and resetting the supply stock 6 comprises unloading the supply stock 6 of the agricultural machine 2.

With regard to the supply reset apparatus 9, according to one preferred embodiment, the supply reset apparatus 9 is a supply reset installation 16, i.e. a stationary and immobile structure like a silo. Preferably, this supply reset installation 16 or supply reset apparatus 9, respectively, is positioned outside the working area 3 and in particular outside the agricultural field 4. Alternatively or in addition, the path 1 is preferably determined based also on a position of the supply reset apparatus 9. As an alternative to such a supply reset installation 16, the reset supply apparatus 9 may also be a mobile supply reset apparatus. In such a case, the appropriate determination of the costs of the reset tours 8 may be based on a respective, preferably dynamically determined, meeting point between the agricultural machine 2 and the mobile reset supply apparatus, which meeting point would then be considered as the relevant position supply reset apparatus 9.

### Reference sign list

- 1: Path
- 2: Agricultural machine
- 3: Working area
- 4: Agricultural field
- 5: Headlands
- 6: Supply stock
- 7 a-c: Supply level
- 8: Reset tour
- 9: Reset apparatus
- 10: Target tracks
- 10 a: Start target track
- 10 b: Destination target track
- 10 c: Further target track
- 10 d: Intermediate target track
- 11: Outer boundary
- 12: U-turn
- 13: Limit point
- 14: Reversal section
- 15 a, b: Complementary section
- 16: Reset installation

## Claims

1. Method for planning a path (1) of an agricultural machine (2), wherein in the method the agricultural machine (2) traverses the path (1), wherein the agricultural machine (2) executes a supply-based agricultural process in a working area (3) of an agricultural field (4) with an implement along the path (1), wherein the path (1) comprises reset tours (8) to reset a supply stock (6) of the agricultural machine (2) with a supply reset apparatus (9), wherein the path (1) is determined by composing at least part of the path (1) from at least portions of pre-defined target tracks (10), which path (1) is optimized according to at least one optimization criterion regarding the reset tours (8) and wherein at least part of the path (1) is optimized taking into account the position of the agricultural machine (2), the position of the supply reset apparatus (9) and the supply level of the supply stock (6), wherein an optimization criterion is to have the supply stock (6) converge to a supply threshold when the agricultural machine (2) crosses the outer boundary (11),
**characterized in,**
**that** at least part of the path (1) is determined by selecting portions of target tracks (10) and by sequencing the selected portions of target tracks (10) into a sequence, the selecting and sequencing being optimized according to the at least one optimization criterion, that the path (1) comprises a U-turn (12) within the working area (3) from a start target track (10a) to a destination target track (10b), which U-turn is arranged within the path (1) such that the at least one optimization criterion is met and that the U-turn (12) is arranged in the path (1) such that a reversal section (14) on the destination target track (10b) from the U-turn (12) to the outer boundary (11) is uncovered by the path (1) before the U-turn (12.

2. Method according to claim 1, **characterized in that** an optimization criterion is to have the number of reset tours (8) minimized

3. Method according to claim 1 or 2, **characterized in that** an optimization criterion is to have the supply stock (6) converge to the supply limit when the agricultural machine (2) crosses the outer boundary (11).

4. Method according to one of claims 1 to 3, **characterized in that** an optimization criterion is to have the respective reset tour (8) executed when or after the supply stock (6) reaches a, preferably pre-defined, supply threshold.

5. Method according to one of claims 1 to 4, **characterized in that**, at least part of the path (1) is determined by selecting target tracks (10) and portions of target tracks (10) and by sequencing the selected target tracks (10) and portions of target tracks (10) into a sequence, the selecting and sequencing being optimized according to the at least one optimization criterion.

6. Method according to any one of the claims 1 to 5, **characterized in that**, the destination target track (10b) is an adjacent destination target track (10b).

7. Method according to one of claims 1 to 6, **characterized in that** determining the path (1) comprises determining a sequence of covering the target tracks (10) by the path (1) such that the at least one optimization criterion is met, preferably, that determining the path (1) comprises determining a sequence of covering the target tracks (10) by the path (1) such that the agricultural machine (2) crosses the outer boundary (11) as or before the supply stock (6) reaches the supply limit.

8. Method according to claim 7, **characterized in that**, determining the sequence of covering the target tracks (10) comprises skipping at least one intermediate target track (10d) between a start target track (10a) and a destination target track (10b), such that the at least one optimization criterion is met.

9. Method according to claim 8, **characterized in that**, the intermediate target track (10d) is skipped if, after having covered the start target track (10a), the agricultural machine (2) can traverse the destination target track (10b) such that the at least one optimization criterion is met, such that the agricultural machine (2) crosses the outer boundary (11) as or before the supply stock (6) reaches the supply limit.

10. Method according to claim 8 or 9, **characterized in that**, an intermediate target track (10d) adjacent to the start target track (10a) is skipped if, after having covered the start target track (10a), the supply stock (6) after traversing the destination target track (10b) and crossing the outer boundary (11) is closer to the supply limit than it would be after traversing the intermediate target track (10d) and crossing the outer boundary (11).

11. Method according to one of claims 1 to 10, **characterized in that**, the path (1) is dynamically updated while the agricultural machine (2) traverses the path (1), preferably, wherein the path (1) is dynamically updated based on a sensor measurement of the agricultural process, in particular, wherein the sensor measurement comprises a measurement of the supply stock (6).

12. Method according to one of claims 1 to 11, **characterized in that**, the supply reset apparatus (9) is a supply reset installation (16), i.e. a stationary and immobile structure, preferably, wherein the supply reset installation (16) is positioned outside the working area (3).

## Patentansprüche

1. Verfahren zum Planen einer Route (1) einer landwirtschaftlichen Maschine (2), wobei die landwirtschaftliche Maschine (2) in dem Verfahren die Route (1) abfährt, wobei die landwirtschaftliche Maschine (2) in einem Arbeitsbereich (3) eines landwirtschaftlichen Feldes (4) einen vorratsbasierten landwirtschaftlichen Prozess entlang der Route (1) mit einem Arbeitsgerät ausführt, wobei die Route (1) Rückstelltouren (8) umfasst, um einen Vorratsbestand (6) der landwirtschaftlichen Maschine (2) mit einer Vorratsrückstellvorrichtung (9) zurückzustellen, wobei die Route (1) durch Zusammensetzen mindestens eines Teils der Route (1) aus mindestens Abschnitten vorab definierter Sollfahrwege (10) bestimmt wird, wobei die Route (1) gemäß mindestens einem Optimierungskriterium bezüglich der Rückstelltouren (8) optimiert wird und wobei mindestens ein Teil der Route (1) unter Berücksichtigung der Position der landwirtschaftlichen Maschine (2), der Position der Vorratsrückstellvorrichtung (9) und des Vorratsfüllstandes des Vorratsbestandes (6) optimiert wird, wobei ein Optimierungskriterium darin besteht, den Vorratsbestand (6) sich einem Vorratsgrenzwert annähern zu lassen, wenn die landwirtschaftliche Maschine (2) die Außengrenze (11) überquert,
**dadurch gekennzeichnet,**
**dass** mindestens ein Teil der Route (1) durch Auswählen von Abschnitten von Sollfahrwegen (10) und Anordnen der ausgewählten Abschnitte von Sollfahrwegen (10) in einer Reihenfolge bestimmt wird, wobei das Auswählen und Anordnen in einer Reihenfolge gemäß dem mindestens einen Optimierungskriterium optimiert wird, dass die Route (1) eine Kehrtwendung (12) innerhalb des Arbeitsbereichs (3) von einem Ausgangssollfahrweg (10a) zu einem Zielsollfahrweg (10b) umfasst, wobei die Kehrtwendung derart innerhalb der Route (1) angeordnet wird, dass das mindestens eine Optimierungskriterium erfüllt wird und dass die Kehrtwendung (12) derart in der Route (1) angeordnet wird, dass ein Umkehrteilabschnitt (14) auf dem Zielsollfahrweg (10b) von der Kehrtwendung (12) zur Außengrenze (11) nicht vor der Kehrtwendung (12) durch die Route (1) zurückgelegt wird.

2. Verfahren nach Anspruch 1, **dadurch gekennzeichnet, dass** ein Optimierungskriterium darin besteht, die Anzahl von Rückstelltouren (8) minimieren zu lassen.

3. Verfahren nach Anspruch 1 oder 2, **dadurch gekennzeichnet, dass** ein Optimierungskriterium darin besteht, den Vorratsbestand (6) sich an das Vorratslimit annähern zu lassen, wenn die landwirtschaftliche Maschine (2) die Außengrenze (11) überquert.

4. Verfahren nach einem der Ansprüche 1 bis 3, **dadurch gekennzeichnet, dass** ein Optimierungskriterium darin besteht, die jeweilige Rückstelltour (8) ausführen zu lassen, wenn oder nachdem der Vorratsbestand (6) einen - vorzugsweise vorab definierten - Vorratsgrenzwert erreicht.

5. Verfahren nach einem der Ansprüche 1 bis 4, **dadurch gekennzeichnet, dass** mindestens ein Teil der Route (1) durch Auswählen von Sollfahrwegen (10) und Abschnitten von Sollfahrwegen (10) und durch Anordnen der ausgewählten Sollfahrwege (10) und Abschnitte von Sollfahrwegen (10) in einer Reihenfolge bestimmt wird, wobei das Auswählen und das Anordnen in einer Reihenfolge gemäß dem mindestens einen Optimierungskriterium optimiert wird.

6. Verfahren nach einem der Ansprüche 1 bis 5, **dadurch gekennzeichnet, dass** der Zielsollfahrweg (10b) ein benachbarter Zielsollfahrweg (10b) ist.

7. Verfahren nach einem der Ansprüche 1 bis 6, **dadurch gekennzeichnet, dass** das Bestimmen der Route (1) das Bestimmen einer Reihenfolge des Zurücklegens der Sollfahrwege (10) durch die Route (1) derart umfasst, dass das mindestens eine Optimierungskriterium erfüllt wird, vorzugsweise dass das Bestimmen der Route (1) das Bestimmen einer Reihenfolge des Zurücklegens der Sollfahrwege (10) durch die Route (1) derart umfasst, dass die landwirtschaftliche Maschine (2) die Außengrenze (11) überquert, wenn oder bevor der Vorratsbestand (6) das Vorratslimit erreicht.

8. Verfahren nach Anspruch 7, **dadurch gekennzeichnet, dass** das Bestimmen der Reihenfolge des Zurücklegens der Sollfahrwege (10) das Auslassen mindestens eines dazwischenliegenden Sollfahrweges (10d) zwischen einem Ausgangssollfahrweg (10a) und einem Zielsollfahrweg (10b) derart umfasst, dass das mindestens eine Optimierungskriterium erfüllt wird.

9. Verfahren nach Anspruch 8, **dadurch gekennzeichnet, dass** der dazwischenliegende Sollfahrweg (10d) ausgelassen wird, wenn die landwirtschaftliche Maschine (2), nachdem sie den Ausgangssollfahrweg (10a) zurückgelegt hat, den Zielsollfahrweg (10b) derart abfahren kann, dass die landwirtschaftliche Maschine (2) die Außengrenze (11) überquert, wenn oder bevor der Vorratsbestand (6) das Vorratslimit erreicht.

10. Verfahren nach Anspruch 8 oder 9, **dadurch gekennzeichnet, dass** ein dazwischenliegender Sollfahrweg (10d), der benachbart zu dem Ausgangssollfahrweg (10a) ist, ausgelassen wird, wenn, nachdem der Ausgangssollfahrweg (10a) abgefahren wurde, der Vorratsbestand (6) nach dem Abfahren des Zielsollfahrweges (10b) und dem Überqueren der Außengrenze (11) näher am Bestandslimit liegt, als es nach dem Abfahren des dazwischenliegenden Sollfahrweges (10d) und dem Überqueren der Außengrenze (11) der Fall wäre.

11. Verfahren nach einem der Ansprüche 1 bis 10, **dadurch gekennzeichnet, dass** die Route (1) dynamisch aktualisiert wird, während die landwirtschaftliche Maschine (2) die Route (1) abfährt, vorzugsweise wobei die Route (1) basierend auf einer Sensormessung des landwirtschaftlichen Prozesses dynamisch aktualisiert wird, insbesondere wobei die Sensormessung eine Messung des Vorratsbestandes (6) umfasst.

12. Verfahren nach einem der Ansprüche 1 bis 11, **dadurch gekennzeichnet, dass** die Vorratsrückstellvorrichtung (9) eine Vorratsrückstellinstallation (16) ist, d. h. eine stationäre und unbewegliche Struktur, vorzugsweise wobei die Vorratsrückstellinstallation (16) außerhalb des Arbeitsbereichs (3) positioniert ist.

## Revendications

1. Procédé pour planifier un parcours (1) d'une machine agricole (2), dans lequel dans le procédé la machine agricole (2) traverse le parcours (1), dans lequel la machine agricole (2) exécute un processus agricole basé sur l'approvisionnement dans une zone de travail (3) d'un champ agricole (4) avec un outil le long du parcours (1), dans lequel le parcours (1) comprend des visites de réinitialisation (8) pour réinitialiser une réserve d'approvisionnement (6) de la machine agricole (2) avec un appareil de réinitialisation d'approvisionnement (9), dans lequel le parcours (1) est déterminé en composant au moins une partie du parcours (1) à partir d'au moins des parties de pistes cibles (10) prédéfinies, lequel parcours (1) est optimisé en fonction d'au moins un critère d'optimisation concernant les visites de réinitialisation (8) et dans lequel au moins une partie du parcours (1) est optimisée en prenant en compte la position de la machine agricole (2), la position de l'appareil de réinitialisation d'approvisionnement (9) et le niveau d'approvisionnement de la réserve d'approvisionnement (6), dans lequel un critère d'optimisation consiste à faire converger la réserve d'approvisionnement (6) vers un seuil d'approvisionnement lorsque la machine agricole (2) franchit la limite externe (11),
**caractérisé en ce que**
au moins une partie du parcours (1) est déterminée en sélectionnant des parties de pistes cibles (10) et en séquençant les parties de pistes cibles (10) sélectionnées en une séquence, la sélection et le séquençage étant optimisés en fonction de l'au moins un critère d'optimisation, **en ce que** le parcours (1) comprend un demi-tour (12) à l'intérieur de la zone de travail (3) d'une piste cible de départ (10a) vers une piste cible de destination (10b), lequel demi-tour est agencé à l'intérieur du parcours (1) de telle sorte que l'au moins un critère d'optimisation est satisfait et **en ce que** le demi-tour (12) est agencé dans le parcours (1) de telle sorte qu'une section de retournement (14) sur la piste cible de destination (10b) du demi-tour (12) vers la limite externe (11) n'est pas couverte par le parcours (1) avant le demi-tour (12).

2. Procédé selon la revendication 1, **caractérisé en ce qu'**un critère d'optimisation consiste à minimiser le nombre de visites de réinitialisation (8).

3. Procédé selon la revendication 1 ou 2, **caractérisé en ce qu'**un critère d'optimisation consiste à faire converger la réserve d'approvisionnement (6) vers la limite d'approvisionnement lorsque la machine agricole (2) franchit la limite externe (11).

4. Procédé selon l'une des revendications 1 à 3, **caractérisé en ce qu'**un critère d'optimisation consiste à exécuter la visite de réinitialisation (8) respective lorsque ou après que la réserve d'approvisionnement (6) atteint un seuil d'approvisionnement, de préférence prédéfini.

5. Procédé selon l'une des revendications 1 à 4, **caractérisé en ce qu'**au moins une partie du parcours (1) est déterminée en sélectionnant des pistes cibles (10) et des parties de pistes cibles (10) et en séquençant les pistes cibles (10) et les parties de pistes cibles (10) sélectionnées en une séquence, la sélection et le séquençage étant optimisés en fonction de l'au moins un critère d'optimisation.

6. Procédé selon l'une quelconque des revendications 1 à 5, **caractérisé en ce que** la piste cible de destination (10b) est une piste cible de destination (10b) adjacente.

7. Procédé selon l'une des revendications 1 à 6, **caractérisé en ce que** la détermination du parcours (1) comprend la détermination d'une séquence de couverture des pistes cibles (10) par le parcours (1) de telle sorte que l'au moins un critère d'optimisation est satisfait, de préférence **en ce que** la détermination du parcours (1) comprend la détermination d'une séquence de couverture des pistes cibles (10) par le parcours (1) de telle sorte que la machine agricole (2) franchit la limite externe (11) lorsque ou avant que la réserve d'approvisionnement (6) atteigne la limite d'approvisionnement.

8. Procédé selon la revendication 7, **caractérisé en ce que** la détermination de la séquence de couverture des pistes cibles (10) comprend le fait d'ignorer au moins une piste cible intermédiaire (10d) entre une piste cible de départ (10a) et une piste cible de destination (10b), de telle sorte que l'au moins un critère d'optimisation est satisfait.

9. Procédé selon la revendication 8, **caractérisé en ce que** la piste cible intermédiaire (10d) est ignorée si, après avoir couvert la piste cible de départ (10a), la machine agricole (2) peut traverser la piste cible de destination (10b) de telle sorte que l'au moins un critère d'optimisation est satisfait, de telle sorte que la machine agricole (2) franchit la limite externe (11) lorsque ou avant que la réserve d'approvisionnement (6) atteigne la limite d'approvisionnement.

10. Procédé selon la revendication 8 ou 9, **caractérisé en ce qu'**une piste cible intermédiaire (10d) adjacente à la piste cible de départ (10a) est ignorée si, après avoir couvert la piste cible de départ (10a), la réserve d'approvisionnement (6) après avoir traversé la piste cible de destination (10b) et franchi la limite externe (11) est plus proche de la limite d'approvisionnement qu'elle ne le serait après avoir traversé la piste cible intermédiaire (10d) et franchi la limite externe (11).

11. Procédé selon l'une des revendications 1 à 10, **caractérisé en ce que** le parcours (1) est mis à jour de manière dynamique pendant que la machine agricole (2) traverse le parcours (1), de préférence dans lequel le parcours (1) est mis à jour de manière dynamique en fonction d'une mesure de capteur du processus agricole, en particulier dans lequel la mesure de capteur comprend une mesure de la réserve d'approvisionnement (6).

12. Procédé selon l'une des revendications 1 à 11, **caractérisé en ce que** l'appareil de réinitialisation d'approvisionnement (9) est une installation de réinitialisation d'approvisionnement (16), c'est-à-dire une structure fixe et immobile, de préférence dans lequel l'installation de réinitialisation d'approvisionnement (16) est positionnée en dehors de la zone de travail (3).
